Europäisches Patentamt

European Patent Office

Office européen des brevets

(11) Numéro de publication: **0 319 421 B1**

# FASCICULE DE BREVET EUROPEEN

(45) Date de publication de fascicule du brevet: **17.06.92**

(51) Int. Cl.5: **G06F 7/02**, G06F 7/24, G06F 7/22

(21) Numéro de dépôt: **88403034.7**

(22) Date de dépôt: **01.12.88**

(54) **Comparateur binaire et opérateur de tri de nombres binaires.**

(30) Priorité: **02.12.87 FR 8716718**

(43) Date de publication de la demande:
**07.06.89 Bulletin 89/23**

(45) Mention de la délivrance du brevet:
**17.06.92 Bulletin 92/25**

(84) Etats contractants désignés:
**BE DE GB IT NL SE**

(56) Documents cités:
**US-A- 4 439 840**

**IEEE TRANSACTIONS ON ELECTRONIC COM-
PUTERS, vol. EC-12, no. 4 août 1963, pages
410,411, IEEE, New York, US; H. WEINSTEIN:
"A high-speed "compare" circuit"**

**ICASSP'85 PROCEEDINGS, INTERNATIONAL
CONFERENCE ON ACOUSTICS, SPEECH,
AND SIGNAL PROCESSING, TAMPA, FLORI-
DA, 26-29 mars 1985, vol. 3 des 4, pages
1001-1004, IEEE, New York, US; N. DEMAS-
SIEUX et al.: "VLSI architecture for a one
chip video median filter"**

**IBM TECHNICAL DISCLOSURE BULLETIN, vol.
11, no. 8, janvier 1969, page 934, New York,
US; D. MONTGOMERY et al.: "Universal digital input"**

(73) Titulaire: **ETAT FRANCAIS représenté par le
Ministre Délégué des Postes et Télécommunications
(CENTRE NATIONAL D'ETUDES DES TELE-
COMMUNICATIONS) 38-40 rue du Général
Leclerc
F-92131 Issy-les-Moulineaux(FR)**

(72) Inventeur: **Jutand, Francis
167 Rue Etienne Dolet
F-94230 Cachan(FR)**
Inventeur: **Galisson, Arnaud
28 Passage Trubert-Bellier
F-75013 Paris(FR)**
Inventeur: **Demassieux, Nicolas
4 Impasse Reille
F-75014 Paris(FR)**

(74) Mandataire: **Mongrédien, André et al
c/o BREVATOME 25, rue de Ponthieu
F-75008 Paris(FR)**

EP 0 319 421 B1

## Description

La présente invention a pour objet un comparateur binaire pour comparer deux nombres binaires afin de déterminer le plus grand, ou le plus petit, de ces deux nombres binaires.

L'invention a également pour objet un opérateur de tri d'un ensemble de nombres binaires. Cet opérateur permet de mettre en oeuvre un tri complet, consistant à ordonner un ensemble de nombres binaires, ou un tri sélectif, consistant à extraire le plus petit, ou le plus grand, nombre binaire d'un ensemble.

L'opération de tri est l'une des opérations les plus courantes rencontrées dans les systèmes de traitement de l'information. Elle est mise en oeuvre notamment dans le domaine du traitement de l'image, en particulier pour des applications telles que le filtrage, la morphologie mathématique ou autre.

De manière générale, un opérateur de tri comprend un grand nombre de comparateurs identiques, chaque comparateur étant conçu pour recevoir deux nombres binaires et pour délivrer soit le plus grand de deux nombres binaires, soit le plus petit des deux nombres binaires, soit les deux nombres binaires dans un ordre prédéterminé. Il existe différentes techniques de tri selon la structure des comparateurs.

Une première technique est décrite dans l'article "VLSI ARCHITECTURE FOR A ONE CHIP VIDEO MEDIAN FILTER", de N. DEMASSIEUX et al., ICCASP 1985. Dans cette structure de tri, chaque comparateur commande un multiplexeur de choix. Cette technique permet d'utiliser un minimum de composants lorsqu'on utilise des comparateurs travaillant en premier sur le bit le moins significatif. Le temps de traversée de ce comparateur est relativement long. Il faut donc placer en entrée ou en sortie du comparateur des registres de stockage, ce qui présente l'inconvénient d'un accroissement de la complexité des circuits et la nécessité d'utiliser une structure pipe-line. Avec cette structure, il faut achever complètement une comparaison entre deux nombres binaires avant de commencer une autre comparaison portant sur l'un de ces deux nombres binaires.

On connaît une deuxième structure de tri, dite structure de tri bit série. Dans cette structure, les comparateurs sont équivalents à ceux de la structure précédente mais traitent séquentiellement les bits d'un nombre binaire et commencent par le bit le plus significatif. Cette structure de tri présente les inconvénients inhérents aux traitements en série ; si chaque nombre binaire est codé sur b bits, il faut b coups d'horloge pour obtenir le résultat d'un comparaison.

On connaît une troisième technique de tri, dite d'extraction bit à bit. Cette technique permet uniquement de réaliser un tri sélectif parmi un ensemble de nombres binaires (le tri complet n'est pas réalisable). Cette technique a pour inconvénient majeur que sa complexité croît de façon très importante avec la quantité de nombres binaires à comparer et qu'elle engendre de nombreux chemins critiques.

On connaît une quatrième structure de tri, qui est décrite dans l'article "A high-speed compare circuit", de H. Weinstein, IEEE transactions on electronic computers, vol. EC-12, no. 4, août 1963, pages 410, 411; et qui traite simultanément les bits des nombres binaires à comparer pour donner le bit le plus significatif pour lequel les deux nombres diffèrent en utilisant plusieurs opérateurs connectés à une matrice à diodes. Finalement le plus grand des deux nombres est indiqué.

De manière générale, les structures de tri connues présentent l'inconvénient de devenir très rapidement inutilisables lorsque la quantité de nombres à comparer et la dynamique de ceux-ci (nombre de bits) sont grands. L'invention a notamment pour but de réduire le coût en complexité et en temps de traversée d'une telle structure.

L'invention consiste, dans une comparaison entre deux nombres binaires, à délivrer le bit du résultat en série, du bit de poids le plus fort vers le bit de poids le plus faible, chaque bit étant délivré dès qu'il est obtenu, sans attendre le résultat sur les bits de poids le plus faible. Les nombres binaires peuvent être des nombres binaires non-signés ou des nombres binaires codés en complément à deux.

De manière précise, l'invention a pour objet un comparateur binaire pour comparer deux nombres binaires $A = A_{b-1}, A_{b-2}, ..., A_0$ et $B = B_{b-1}, B_{b-2}, ..., B_0$, où b est un entier et b-1 désigne le bit de poids le plus fort, comprenant b opérateurs de comparaison identiques $OC_{b-1}, OC_{b-2}, ..., OC_0$, l'opérateur de comparaison $OC_i$, $0 \leq i \leq b-1$, recevant les bits $A_i$, $B_i$ des nombres binaires A, B, caractérisé en ce qu'il reçoit des bits $T_{i+1}$, $V_{i+1}$ de l'opérateur de comparaison $OC_{i+1}$, l'opérateur de comparaison $OC_{b-1}$ recevant des bits $T_b$, $V_b$ ayant pour valeur : $T_b = 0$, $V_b = X$ (1 ou 0), ledit opérateur de comparaison $OC_i$ délivrant :

- un bit $T_i$ indiquant si la comparaison des bits de poids supérieur ou égal à i des nombres binaires A, B permet de déterminer le plus petit et le plus grand de ces nombres binaires,
- un bit $V_i$ indiquant, lorsque le bit $T_i$ est affirmé, lequel des deux nombres A, B est le plus grand,
- et au moins un bit parmi un bit $M_i$ égal au bit de rang i du plus grand des deux nombres binaires A, B, et un bit $m_i$ égal au bit de rang i du plus petit des deux nombres binaires A, B,

lesdits bits délivrés par ledit opérateur de comparaison $OC_i$ étant calculés selon les équations logiques suivantes :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

où " + ", "$\oplus$" et "." représentent respectivement les opérations logiques OU, OU-EXCLUSIF et ET.

L'invention a également pour objet un opérateur de tri comprenant une pluralité de comparateurs, selon l'invention, organisée en plusieurs étages suivant un arbre de tri. L'utilisation de ces comparateurs présente l'avantage que, dès que la comparaison est terminée sur un bit, le résultat de cette comparaison est transmis à l'étage suivant sans attendre la fin de la comparaison du mot complet.

Le temps de traitement pour réaliser un tri, complet ou sélectif de n nombres binaires comprenant chacun b bits est ainsi ramené à $[b + int(\log_2 n) + 1].tb$ au lieu de $b.[int(\log_2 n) + 1].tb$ dans les dispositifs connus, où int indique la fonction partie entière et tb est le temps de traitement d'un bit dans un comparateur.

La complexité de l'opérateur de tri est réduite, selon l'invention, par la possibilité de supprimer les registres qui, dans les opérateurs connus sont disposés entre les étages successifs de comparateurs.

Les caractéristiques et avantages de l'invention ressortiront mieux de la description qui va suivre, donnée à titre illustratif mais non limitatif, en référence aux dessins annexés, sur lesquels :

- la figure 1 illustre schématiquement la structure d'un comparateur pour comparer deux nombres binaires,
- la figure 2 illustre un mode de réalisation d'un circuit pour produire le bit $T_i$ et le bit du complémentaire $\overline{T}_i$, de l'opérateur de comparaison $OC_i$ du comparateur de la figure 1,
- la figure 3 représente un inverseur utilisé dans l'invention,
- la figure 4 illustre un mode de réalisation d'un circuit pour produire le bit $V_i$, et le bit complémentaire $\overline{V}_i$, délivré par l'opérateur de comparaison $OC_i$ du comparateur de la figure 1,
- la figure 5 illustre un mode de réalisation pour produire le bit $M_i$ et le bit complémentaire $\overline{M}_i$ délivré par l'opérateur de comparaison $OC_i$ du comparateur de la figure 1,
- la figure 6 illustre un mode de réalisation pour produire le bit $m_i$ et le bit complémentaire $\overline{m}_i$ délivré par l'opérateur de comparaison $OC_i$ du comparateur de la figure 1,
- la figure 7 représente schématiquement un opérateur pour le tri complet de quatre nombres binaires, comprenant quatre étages de comparateurs et montrant les connexions entre les comparateurs,
- la figure 8 montre la structure générale d'un opérateur pour le tri complet de n nombres binaires selon l'invention,
- la figure 9 illustre un mode de réalisation de chacun des inverseurs du circuit de la figure 12,
- la figure 10 représente schématiquement un opérateur pour le tri sélectif de quatre nombres binaires, comprenant un premier étage à deux comparateurs et un second étage à un seul comparateur et montrant les connexions entre les comparateurs des deux étages,
- la figure 11 illustre la structure générale d'un opérateur pour le tri sélectif de n nombres binaires selon l'invention, et
- la figure 12 illustre une variante de l'opérateur de la figure 11, comprenant des inverseurs avant le premier étage du comparateur et des inverseurs après le dernier comparateur, cette structure permettant d'extraire au choix le plus grand ou le plus petit nombre binaire,
- les figures 13a et 13b représentent respectivement des comparateurs de tri complet et de tri sélectif pour des structures de type pipe-line.

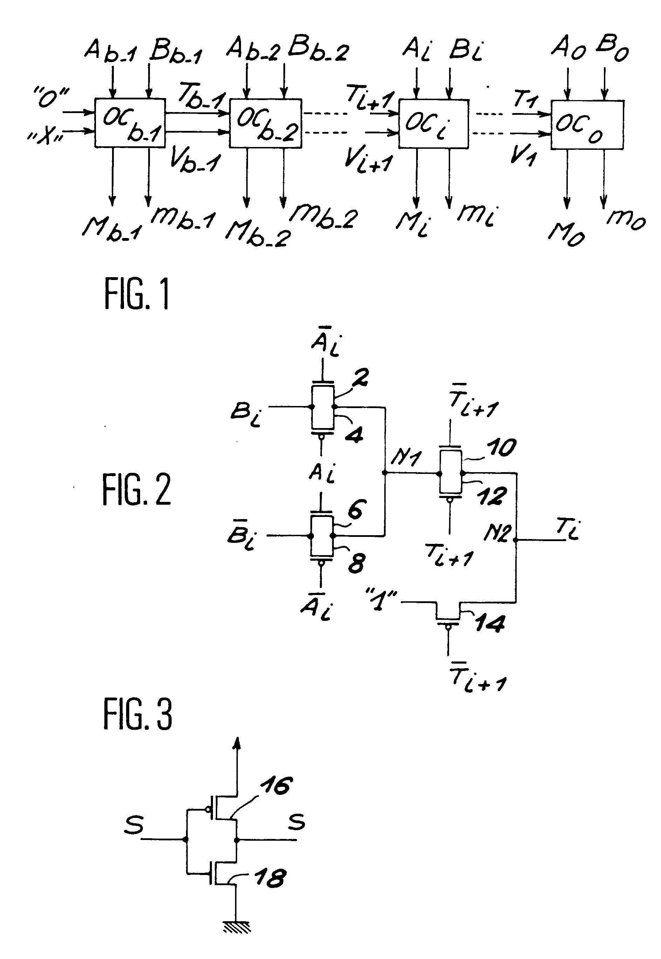

On a représenté schématiquement sur la figure 1 un comparateur, conforme à l'invention, pour comparer deux nombres binaires $A = A_{b-1}, A_{b-2}, ..., A_0$ et $B = B_{b-1}, B_{b-2}, ..., B_0$, où l'indice b-1 représente le bit de poids le plus fort et l'indice 0 le bit de poids le plus faible.

Le comparateur comprend un ensemble de b opérateurs de comparaison identiques $OC_{b-1}$, $OC_{b-2}$, ... ces opérateurs de comparaison sont connectés en série dans l'ordre des bits décroissants. L'opérateur de comparaison $OC_i$, ou $0 \leq i \leq b-2$, reçoit ainsi de l'opérateur de comparaison $OC_{i+1}$ un premier bit $T_{i+1}$ qui indique si la comparaison sur les bits de poids supérieur à i des deux nombres binaires A et B a permis d'ordonner ces deux nombres binaires, et un bit $V_{i+1}$ qui indique, lorsque les deux nombres binaires sont ordonnés, lequel des deux nombres binaires est le plus grand.

Plus exactement, $T_{i+1}$ est égal à "0" si la comparaison des bits de poids supérieur ou égal à i + 1 ne permet pas d'ordonner les nombres binaires A et B. Au contraire, si les nombres binaires peuvent être ordonnés, $T_{i+1}$ est égal à "1", et $V_{i+1}$ est égal à "0" (respectivement "1") si le nombre binaire A (respectivement le nombre binaire B) est le plus grand des deux nombres binaires. Pour l'opérateur de comparaison $OC_{b-1}$ correspondant au bit de poids le plus fort, les bits $T_b$ et $V_b$ reçus sont fixés à $T_b = 0$ et $V_b = X$ (0 ou 1 indifféremment).

L'opérateur de comparaison $OC_i$ comprend donc deux entrées pour recevoir les bits $T_{i+1}$ et $V_{i+1}$ et deux entrées pour recevoir les bits de données $A_i$ et $B_i$. Il comprend également deux sorties pour délivrer les bits $T_i$ et $V_i$ (ces sorties sont inutiles pour l'opérateur de comparaison $OC_0$), une sortie pour délivrer le bit $M_i$ égal au ième bit de Max(A,B), et une sortie pour délivrer le bit $m_i$ égal au ième bit de min(A,B).

Le fonctionnement de l'opérateur de comparaison $OC_i$ est défini par les équations logiques suivantes :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

où " + ", "$\oplus$" et "." représentent respectivement les opérations logiques OU, OU-EXCLUSIF et ET.

Le comparateur selon l'invention représenté sur la figure 1 présente l'avantage, par rapport au comparateur connu, que les bits des résultats $M = M_{b-1}, M_{b-2}, ..., M_0$ et $m = m_{b-1}, m_{b-2}, ..., m_0$ sont délivrés dès qu'ils sont calculés, sans attendre le résultat sur les bits de poids plus faible. Ceci résulte de l'utilisation d'un tri avec le bit de poids le plus fort en tête et de la transmission du résultat entre les opérateurs de comparaison successifs par les bits T et V.

Le comparateur de l'invention présente l'avantage d'avoir une structure simple et utilisant peu de composants. Chaque opérateur de comparaison peut être réalisé à l'aide d'un nombre limité de transistors.

On a représenté sur les figures 2 à 6 un mode de réalisation pour l'obtention des bits $T_i$, $V_i$, $M_i$ et $m_i$. A titre d'exemple, ces circuits sont réalisés en technologie MOS et comprennent des transistors à canal P et des transistors à canal N.

La figure 2 représente un opérateur pour délivrer le bit $T_i$ conformément à l'équation logique $T_i = T_{i+1} + A_i \oplus B_i$ où " + " et "$\oplus$" représentent respectivement la fonction logique OU et la fonction logique OU-EXCLUSIF. La fonction logique OU-EXCLUSIF est réalisée par deux paires de transistors, comprenant chacune un transistor à canal N2,6 et un transistor à canal P 4,8. Le bit $B_i$ est délivré sur un noeud N à travers les transistors 2 et 4 dont les grilles reçoivent respectivement les signaux $\overline{A}_i$ et $A_i$. De manière symétrique, le bit $\overline{B}_i$ est reçu au noeud N à travers les transistors 6 et 8 dont les grilles sont commandées respectivement

par les bits $A_i$ et $\overline{A}_i$.

Les bits complémentaires $\overline{A}_i \ll$ et $\overline{B}_i$ sont obtenus par un inverseur classique tel que représenté sur la figure 3. Cet inverseur comprend un transistor à canal P16 et un transistor à canal N18 connectés en série entre une source d'alimentation et la terre. Le bit S à inverser est appliqué sur les grilles de chacun des transistors, et le bit complémentaire $\overline{S}$ est obtenu au point commun des deux transistors. Chaque opérateur de comparaison comporte quatre inverseurs tels que représentés sur la figure 3, pour produire les bits complémentaires $\overline{M}_i$, $\overline{m}_i$, $\overline{T}_{i+1}$ et $\overline{V}_i$.

En revenant sur la figure 2, le bit présent au noeud N1 est délivré sur un noeud N2 au travers d'un transistor à canal N10 et d'un transistor à canal P12 dont les grilles reçoivent respectivement le bit $\overline{T}_{i+1}$ et le bit $T_{i+1}$. Le noeud N2 reçoit également un bit de valeur "1" par l'intermédiaire d'un transistor à canal P14 dont la grille est commandée par le bit $\overline{T}_{i+1}$. Le bit $T_i$ est disponible sur le noeud N2.

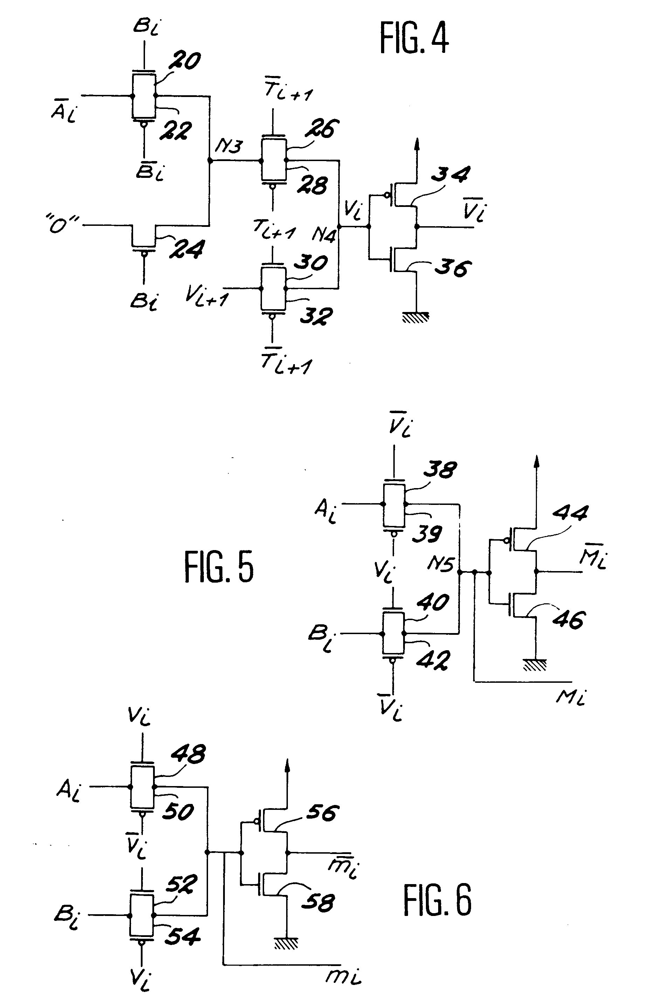

La figure 4 représente un opérateur pour produire le bit $V_i$, et le bit complémentaire $\overline{V}_i$, selon la fonction logique $V_i = T_{i+1}.V_{i+1} + \overline{T}_{i+1}.\overline{A}_i.B_i$ où "." représente la fonction logique ET.

Dans ce circuit, le bit $\overline{A}_i$ est reçu sur un noeud N3 à travers un transistor à canal N20 et un transistor à canal P22 dont les grilles reçoivent respectivement les bits $\overline{B}_i$ et $B_i$. Le noeud N3 reçoit également un bit de valeur "0" à travers un transistor à canal P24 dont la grille reçoit le bit $\overline{B}_i$.

Le noeud N3 est relié à un noeud N4 par un transistor à canal N26 et par un transistor à canal P28 dont les grilles reçoivent les bits $\overline{T}_{i+1}$ et $T_{i+1}$. Le noeud N4 reçoit également le bit $V_{i+1}$ par un transistor à canal N30 et un transistor à canal P32 dont les grilles reçoivent respectivement les bits $T_{i+1}$ et $\overline{T}_{i+1}$. Le bit $V_i$ est ainsi disponible sur le noeud N4.

Le bit complémentaire $\overline{V}_i$ peut être obtenu à partir du bit $V_i$ par deux transistors 34, 36 montés en inverseur comme représenté sur la figure 3.

La figure 5 représente un opérateur pour produire le bit $M_i$ égal au bit de rang i du plus grand des deux nombres binaires A, B. Ce circuit transmet le bit $A_i$ à un noeud N5 par un transistor à canal N38 et un transistor à canal P39 dont les grilles reçoivent respectivement les bits $\overline{V}_i$ et $V_i$. Il reçoit également le bit $B_i$ par l'intermédiaire d'un transistor à canal N40 et d'un transistor à canal P42 dont les grilles reçoivent respectivement les bits $V_i$ et $\overline{V}_i$. Le bit $\overline{M}_i$ est délivré par un inverseur conforme à la figure 3 et constitué par deux transistors 44 et 46 dont les grilles sont reliées au noeud N5.

La figure 6 représente un opérateur pour produire le bit $m_i$ égal au bit de rang i du plus petit des deux nombres binaires A, B. Ce circuit comprend des transistors 48-58 formant un circuit identique à celui obtenu par les transistors 38-46 du circuit de la figure 5. La seule différence avec la figure 5 réside dans le fait que le bit $V_i$ est remplacé par le bit complémentaire $\overline{V_i}$, et réciproquement.

Les figures 2 à 6 illustrent un mode de réalisation d'un opérateur de comparaison pour le comparateur selon l'invention représenté sur la figure 1. Cet opérateur de comparaison comporte seulement 30 transistors MOS et occupe donc une faible surface sous forme intégrée.

Le comparateur représenté sur la figure 1 constitue l'élément de base pour la réalisation d'opérateurs de tri complet ou de tri sélectif.

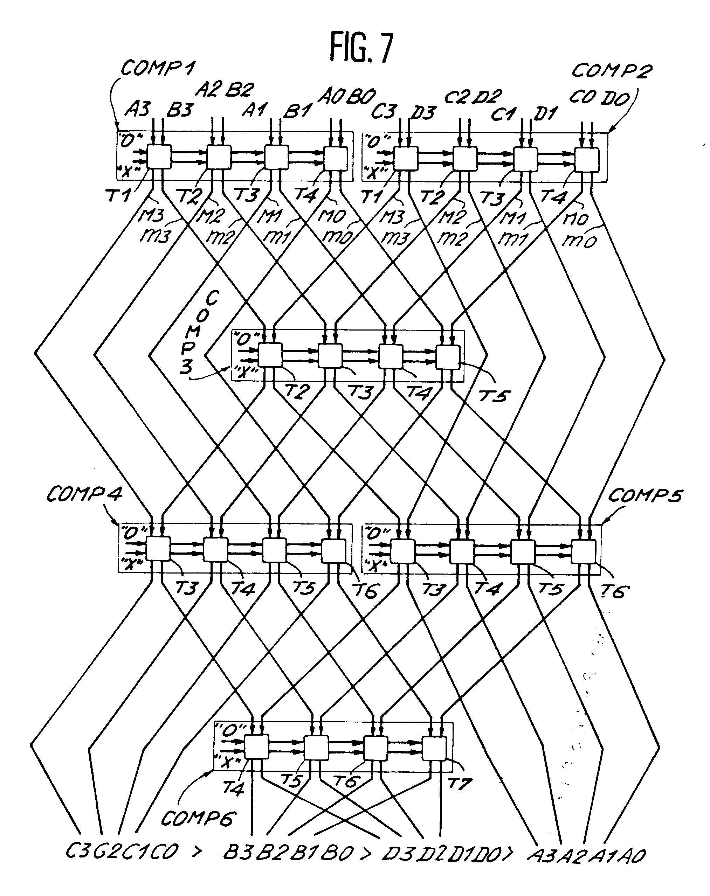

Un opérateur de tri complet pour ordonner quatre nombres binaires $A = A_3 A_2 A_1 A_0$, $B = B_3 B_2 B_1 B_0$, $C = C_3 C_2 C_1 C_0$ et $D = D_3 D_2 D_1 D_0$ est représenté schématiquement sur la figure 7. Ce circuit de tri comporte six comparateurs COMP1, COMP2, COMP3, COMP4, COMP5, COMP6 disposés suivant quatre rangées de comparateurs. Chaque comparateur comporte quatre opérateurs de comparaison recevant chacun un bit de rang donné de deux nombres binaires.

Dans l'exemple choisi, on suppose que les nombres binaires sont, dans l'ordre décroissant, C, B, D et A.

Le comparateur COMP1 qui reçoit les nombres binaires A et B délivre donc sur ses sorties $M_i$ les bits $B_i$ et sur ses sorties $m_i$ les bits $A_i$, où $0 \leq i \leq 3$. De même, le comparateur COMP2 qui reçoit les nombres binaires C et D délivre respectivement sur ses sorties $M_i$ et $m_i$ les bits $C_i$ et $D_i$.

La deuxième rangée de comparateurs comprend le comparateur COMP3 qui reçoit les nombres binaires délivrés sur les sorties $M_i$ du comparateur COMP2 et les sorties $m_i$ du comparateur COMP1.

La troisième rangée de comparateurs comprend les comparateurs COMP4 et COMP5. Le comparateur COMP4 reçoit les nombres binaires délivrés sur les sorties $M_i$ du comparateur COMP1 et les sorties $M_i$ du comparateur COMP3 (les nombres binaires délivrés par le comparateur COMP4 n'étant valides qu'à la réception des nombres binaires délivrés par le comparateur COMP3). Le comparateur COMP5 reçoit les nombres binaires délivrés sur les sorties $m_i$ du comparateur COMP2 et les sorties $m_i$ du comparateur COMP3 (les nombres binaires délivrés par le comparateur COMP4 n'étant valides qu'à la réception des nombres binaires délivrés par le comparateur COMP3).

La quatrième rangée de comparateurs comprend le comparateur COMP6 qui reçoit les nombres binaires délivrés sur les sorties $m_i$ du comparateur COMP4 et les sorties $M_i$ du comparateur COMP5.

On trouve donc en sortie des comparateurs COMP4, COMP5 et COMP6 les nombres binaires A,B,C,D classés dans l'ordre : C,B,D et A.

Dans l'opérateur de tri représenté sur la figure 7, on met à profit le fait que les bits de résultats sont délivrés par les opérateurs de comparaison et qu'ils sont calculés, sans attendre que la préparation soit terminée sur le bit de poids le plus faible. Ceci permet de commencer une comparaison dans la deuxième rangée avant que les comparaisons dans la première rangée ne soient terminées. Pour illustrer ceci, on a indiqué dans chaque opérateur de comparaison le numéro du cycle au cours duquel il délivrait son résultat. Tous les temps de base sont de durée identique et correspondent au temps de traversée d'un opérateur de comparaison.

On constate que les comparateurs d'une même rangée travaillent en parallèle et que les opérateurs de comparaison d'un même comparateur travaillent pendant des temps de base successifs dans l'ordre des bits de poids décroissant.

Le point essentiel, qui résulte de la structure des comparateurs, est que le premier opérateur de comparaison de chaque comparateur de la deuxième rangée travaille pendant le temps de base tb2 qui suit immédiatement le temps de base tb1 pendant lequel travaillent les premiers opérateurs de comparaison des comparateurs de la première rangée. De manière générale, un opérateur de comparaison traitant un bit de rang i dans une rangée j travaille pendant le même temps de base que les opérateurs de comparaison traitant les bits de rang i + 1 de la rangée j-1.

La comparaison de quatre nombres binaires est ainsi obtenue au bout de sept temps de base avec le circuit de l'invention, alors que seize temps de base seraient nécessaires avec un circuit de tri classique.

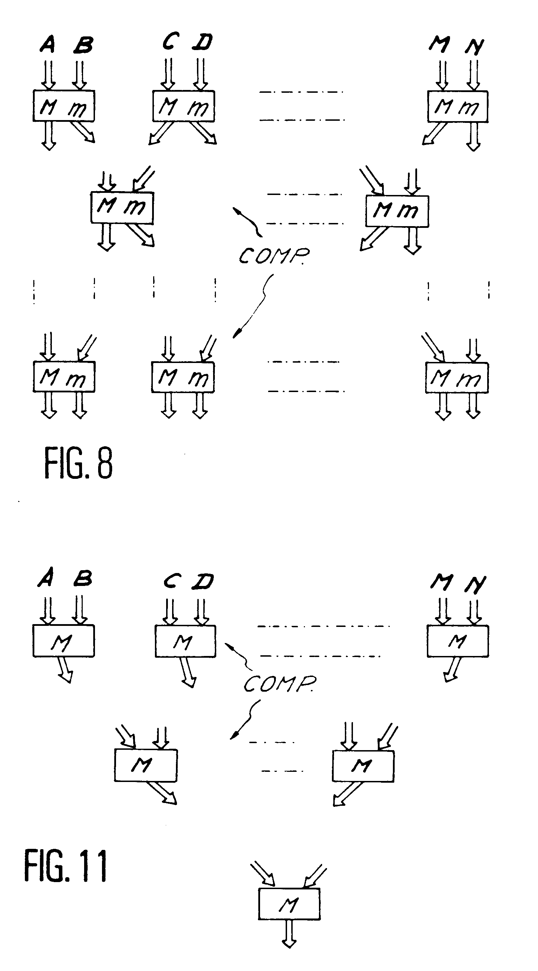

Le circuit représenté sur la figure 7 peut être généralisé pour le tri complet d'un nombre quelconque n de nombres binaires. La figure 8 illustre schématiquement la structure d'un tel opérateur de tri complet. Cet opérateur comprend un ensemble de comparateurs identiques, tels que ceux représentés sur la figure 7. Cet opérateur comporte n rangées de comparateurs dans le cas du "tri bulle".

Les comparateurs sont connectés d'une rangée à la rangée suivante de manière à définir une structure matricielle de tri complet. Il n'est pas utile ici de préciser ces connexions, qui sont bien connues de l'homme de l'art et qui sont décrites notamment dans l'ouvrage "Sorting and Searching" de D. KNUTH, éditeur ADDISON WESLEY.

En généralisant la formule indiquée en référence à la figure 7, on calcule que le nombre de temps de base nécessaires pour réaliser le tri complet de n nombres binaires ayant une longueur de b bit est de :

b + n-1 tb pour le "tri bulle",

b + int(Log$_2$n) + 1 tb pour les algorithmes les plus rapides dans un opérateur de tri complet classique, le nombre de temps de base (tb) nécessaires serait égal à :

b.n pour le "tri bulle"

b.[int(Log$_2$n) + 1] pour les algorithmes les plus rapides le circuit de tri complet de l'invention présente donc un gain en vitesse considérable par rapport à l'art antérieur.

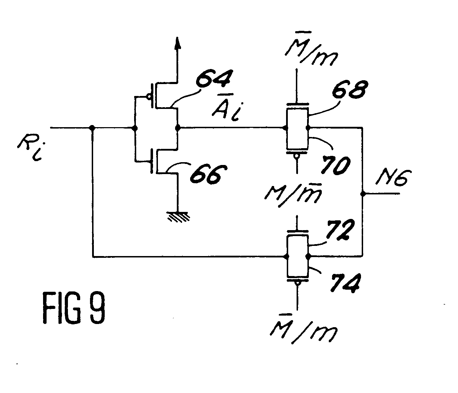

On a représenté sur la figure 9, la cellule de base de chaque inverseur commandable 62. Chaque inverseur commandable comprend b cellules de base, où b est le nombre de bits du nombre binaire à traiter.

Chaque cellule de base comprend un inverseur conforme à la figure 3, constitué par un transistor à canal P64 et un transistor à canal N66. La sortie de l'inverseur est reliée à un noeud N6 par l'intermédiaire d'un transistor à canal N68 et d'un transistor à canal P70 dont les grilles reçoivent respectivement le complémentaire du bit de commande et le bit de commande. L'entrée de l'inverseur est en outre reliée au noeud N6 par un transistor à canal N72 et un transistor à canal P74 dont les grilles reçoivent respectivement le bit de commande et le complémentaire du bit de commande. L'ensemble des noeuds N6 des cellules de base d'un inverseur commandable constitue la sortie de cet inverseur commandable.

On a décrit en référence aux figures 7 à 9 des modes de réalisation d'opérateur de tri complet selon l'invention. Le comparateur selon l'invention, représenté sur la figure 1, peut être utilisé de manière similaire à la réalisation de circuits de tri sélectif.

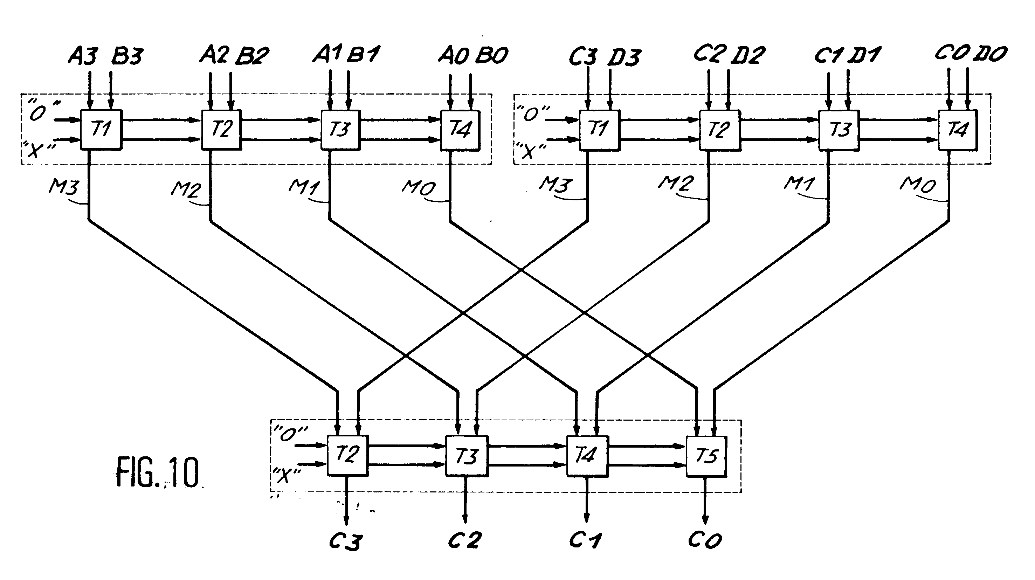

La figure 10 illustre schématiquement un opérateur de tri sélectif pour extraire le plus grand nombre binaire parmi quatre nombres binaires A, B, C et D. Cet opérateur de tri sélectif comprend une première rangée constituée par deux comparateurs et une deuxième rangée constituée par un seul comparateur. Ces comparateurs ont une structure générale identique à celle du comparateur représenté sur la figure 1 mais ne comporte qu'une seule des deux sorties du comparateur de la figure 1. A titre d'exemple, dans le circuit représenté sur la figure 10, les comparateurs comportent la sortie M$_i$.

Dans l'exemple donné sur la figure 10, on a supposé que les nombres binaires reçus étaient tels que C>B>D>A. Comme sur la figure 7, on a indiqué dans chaque opérateur de comparaison le numéro du temps de base pendant lequel cet opérateur de comparaison travaille. Le temps d'extraction du plus grand nombre binaire parmi quatre nombres binaires est de cinq temps de base, alors que dans un circuit de l'art antérieur le nombre de cycles nécessaires est égal à 8.

L'opérateur représenté sur la figure 10 peut être généralisé pour l'extraction du plus grand, ou du plus petit, nombre binaire parmi n nombres binaires, où n est un entier quelconque.

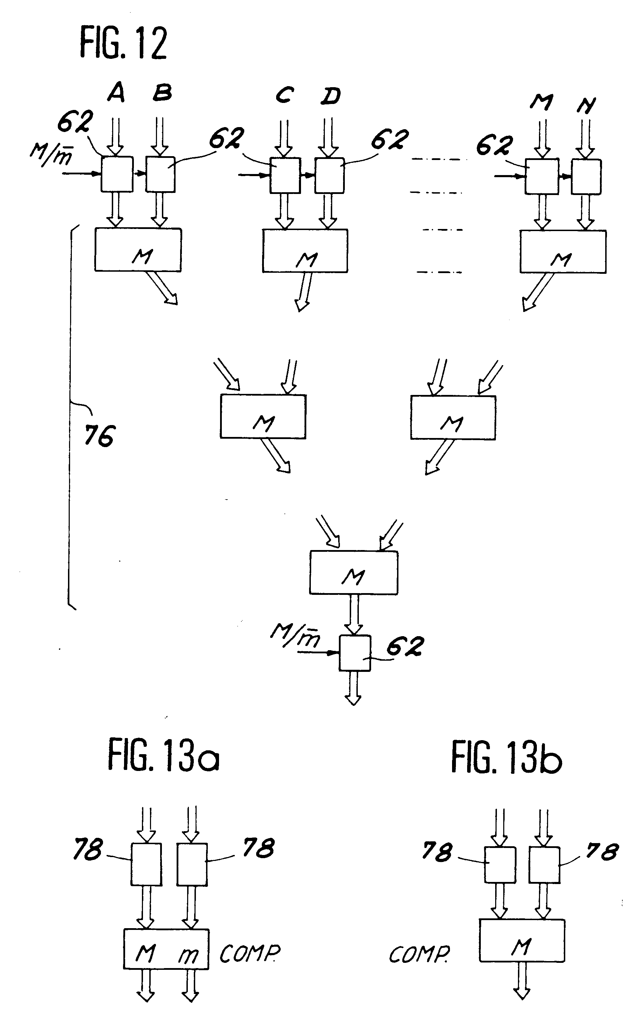

Un opérateur pour l'extraction du plus grand nombre binaire parmi n nombres binaires est représenté schématiquement sur la figure 11. Cet opérateur comprend des comparateurs identiques COMP, qui sont comparables au comparateur représenté sur la figure 1 dans lequel les sorties m$_i$ sont supprimées (ou simplement ne sont pas utilisées). Ces comparateurs sont disposés sur int(log$_2$(n-1)) + 1 rangées et sont connectés de manière à constituer un arbre d'extraction. Ces connexions ont été simplement esquisées sur la figure 11 ; on pourra se reporter à l'ouvrage, déjà cité, "Sorting and Searching" de D. KNUTH, éditeur ADDISON WESLEY pour de plus amples détails.

Le nombre de comparateurs est divisé environ par deux lorsque l'on passe d'une rangée à la rangée suivante. Plus exactement, la rangée i, où 1≤i≤int(Log$_2$(n-1)) + 1, comporte int(n/2$^i$) comparateurs.

Le temps nécessaire à l'extraction du plus grand nombre binaire parmi n nombres binaires avec l'opérateur de la figure 11 est égal à b + int(Log$_2$(n-1)).

L'opérateur représenté sur la figure 11 présente les mêmes limitations que l'opérateur représenté sur la figure 8, c'est-à-dire qu'il est conçu pour effectuer l'extraction du plus grand nombre binaire, soit pour effectuer l'extraction du plus petit nombre binaire. Cet opérateur peut être modifié pour permettre de réaliser la fonction d'extraction du plus grand nombre binaire et la fonction d'extraction du plus petit nombre binaire avec le même circuit.

Un tel opérateur est représenté schématiquement sur la figure 12. L'ensemble 76 de comparateurs formant l'opérateur de tri sélectif de la figure 11 est complété par une rangée de n inverseurs commandables 62, disposés avant la première rangée de comparateurs, et un inverseur commandable 62, disposé en sortie du comparateur de la dernière rangée. Ces inverseurs commandables sont ceux décrits en référence à la figure 9.

Les opérateurs de tri-complet ou sélectif-selon l'invention, tels que représentés sur les figures 7 à 8 et 10 à 12 peuvent être complétés pour permettre la mise en oeuvre d'un traitement pipe-line vertical ou horizontal.

Une structure pipe-line verticale est intéressante lorsque le nombre de rangées de comparateurs d'un circuit de tri est important. Il est dans ce cas intéressant d'ajouter une rangée de registres tous les p rangées de comparateurs de manière à découper l'opérateur de tri en blocs indépendants comprenant chacun p rangées de comparateurs, ces blocs travaillant simultanément sur des ensembles différents de nombres binaires.

Une structure pipe-line horizontale peut également être implantée pour le traitement de nombres binaires de c bits avec un circuit constitué de comparateurs à b bits, où b<c. Cette structure est obtenue en ajoutant, sur chaque entrée de chaque comparateur du circuit de tri, un registre pour recevoir un nombre binaire par paquet de b bits et pour délivrer ce nombre binaire par paquet de p bits au comparateur.

Deux registres 78 sont donc prévus en entrée de chaque comparateur, dans le cas d'une structure pipe-line horizontale ou en entrée de chaque comparateur de la première rangée d'un bloc de p rangées de comparateurs, dans le cas d'une structure pipe-ligne verticale, comme on l'a représenté respectivement sur les figures 14a et 14b pour un comparateur d'un circuit de tri complet et pour un comparateur d'un circuit de tri sélectif.

**Revendications**

1. Comparateur binaire pour comparer deux nombres binaires $A = A_{b-1}, A_{b-2}, ..., A_0$ et $B = B_{b-1}, B_{b-2}, ..., B_0$, où b est un entier et b-1 désigne le bit de poids le plus fort, comprenant b opérateurs de comparaison identiques $OC_{b-1}, OC_{b-2}, ..., OC_0$, l'opérateur de comparaison $OC_i$, $0 \leq i \leq b-1$, recevant les bits $A_i$, $B_i$ des nombres binaires A, B, caractérisé en ce qu'il reçoit des bits $T_{i+1}$, $V_{i+1}$ de l'opérateur de comparaison $OC_{i+1}$, l'opérateur de comparaison $OC_{b-1}$ recevant des bits $T_b$, $V_b$, $T_b = 0$, $V_b = X$ (valeur indéterminée), ledit opérateur de comparaison $OC_i$ délivrant :

   - un bit $T_i$ indiquant si la comparaison des bits de poids supérieur à i des nombres binaires A, B permet de déterminer le plus petit et le plus grand de ces nombres binaires,
   - un bit $V_i$ indiquant, lorsque le bit $T_i$ est affirmé, lequel des deux nombres A, B est le plus grand,
   - et au moins un bit parmi un bit $M_i$ égal au bit de rang i du plus grand des deux nombres binaires A, B, et un bit $m_i$ égal au bit de rang i du plus petit des deux nombres binaires A, B,

   lesdits bits délivrés par ledit opérateur de comparaison $OC_i$ étant calculés selon les équations logiques suivantes :

   $$T_i = T_{i+1} + A_i \oplus B_i$$
   $$V_i = T_{i+1}.V_{i+1} + \overline{T}_{i+1}.\overline{A}_i.B_i$$
   $$M_i = V_i.B_i + \overline{V}_i.A_i$$
   $$m_i = V_i.A_i + \overline{V}_i.B_i$$

   où " + ", "⊕" et "." représentent respectivement les opérations logiques OU, OU-EXCLUSIF et ET.

2. Opérateur de tri complet pour ordonner un ensemble de n nombres binaires, où n et un entier, comprenant un ensemble de comparateurs binaires identiques disposés en plusieurs rangées, les comparateurs de deux rangées consécutives étant connectés pour former une matrice de tri complet, les comparateurs de la première rangée recevant les nombres binaires à ordonner et les comparateurs de la dernière rangée délivrant les nombres binaires ordonnés, chaque comparateur recevant un premier nombre binaire $A = A_{b-1}, A_{b-2}, ..., A_0$ et un second nombre binaire $B = B_{b-1}, B_{b-2}, ..., B_0$, où B est un entier et b-1 désigne le bit de poids le plus fort et comprenant b opérateurs de comparaison identiques $OC_{b-1}, OC_{b-2}, ..., OC_0$, l'opérateur de comparaison $OC_i$, $0 \leq i \leq b-1$, recevant les bits $A_i$, $B_i$ des nombres binaires A, B caractérisé en ce qu'il reçoit des bits $T_{i+1}$, $V_{i+1}$ de l'opérateur de comparaison $OC_{i+1}$, l'opérateur de comparaison $OC_{b-1}$ recevant des bits $T_b$, $V_b$ ayant pour valeur $T_b = 0$, $V_b = X$ (valeur indéterminée), ledit opérateur de comparaison $OC_i$ délivrant :

   - un bit $T_i$ indiquant si la comparaison des bits de poids supérieur à i des nombres binaires A, B permet de déterminer le plus petit et le plus grand de ces nombres binaires,
   - un bit $V_i$ indiquant, lorsque le bit $T_i$ est affirmé, lequel des deux nombres A, B est le plus grand,
   - un bit $M_i$ égal au bit de rang i du plus grand des deux nombres binaires A, B, et un bit $m_i$ égal au bit de rang i du plus petit des deux nombres binaires A, B,

   lesdits bits délivrés par ledit opérateur de comparaison $OC_i$ étant calculés selon les équations logiques suivantes :

   $$T_i = T_{i+1} + A_i \oplus B_i$$
   $$V_i = T_{i+1}.V_{i+1} + \overline{T}_{i+1}.\overline{A}_i.B_i$$
   $$M_i = V_i.B_i + \overline{V}_i.A_i$$
   $$m_i = V_i.A_i + \overline{V}_i.B_i$$

   où " + ", "⊕" et "." représentent respectivement les opérations logiques OU, OU-EXCLUSIF et ET.

3. Opérateur de tri complet selon la revendicaton 2, caractérisé en ce qu'il comprend n rangées comportant chacune int(n/2) ou int(n/2)-1 comparateurs binaires, où "int" représente la fonction "partie entière".

4. Opérateur de tri complet selon l'une quelconque des revendications 2 et 3, à structure pipe-line verticale, caractérisé en ce que les rangées de comparateurs sont regroupées en blocs de p rangées consécutives, chaque bloc étant séparé du bloc suivant par une rangée de n registres.

5. Opérateur de tri complet selon l'une quelconque des revendications 2 à 4, à structure pipe-line horizontale pour ordonner n nombres binaires de c bits avec des comparateurs binaires à b bits, où c>b, caractérisé en ce qu'il comprend sur chaque entrée de chaque comparateur un registre pour recevoir un nombre binaire par paquets de b bits et pour délivrer ledit nombre binaire par paquets de b bits audit comparateur.

6. Opérateur de tri sélectif pour ordonner un ensemble de nombres binaires, où n est un entier, comprend un ensemble de comparateurs binaires identiques disposés en plusieurs rangées, les comparateurs de deux rangées consécutives étant connectés pour former une matrice de tri complet, les comparateurs de la première rangée recevant les nombres binaires à ordonner et les comparateurs de la dernière rangée délivrant les nombres binaires ordonnés, chaque comparateur recevant un premier nombre binaire $A = A_{b-1}, A_{b-2}, ..., A_0$ et un second nombre binaire $B = B_{b-1}, B_{b-2}, ..., B_0$, où B est un entier et b-1 désigne le bit de poids le plus fort et comprenant b opérateurs de comparaison identiques $OC_{b-1}, OC_{b-2}, ..., OC_0$, l'opérateur de comparaison $OC_i$, $0 \leq i \leq b-1$, recevant les bits $A_i$, $B_i$ des nombres binaires A, B caractérisé en ce qu'il reçoit des bits $T_{i+1}$, $V_{i+1}$ de l'opérateur de comparaison $OC_{i+1}$, l'opérateur de comparaison $OC_{b-1}$ recevant des bits $T_b$, $V_b$ ayant une valeur égale à "0", ledit opérateur de comparaison $OC_i$ délivrant :
   - un bit $T_i$ indiquant si la comparaison des bits de poids supérieur à i des nombres binaires A, B permet de déterminer le plus petit et le plus grand de ces nombres binaires,
   - un bit $V_i$ indiquant, lorsque le bit $T_i$ est affirmé, lequel des deux nombres A, B est le plus grand,
   - et l'un des bits parmi un bit $M_i$ égal au bit de rang i du plus grand des deux nombres binaires A, B, et un bit $m_i$ égal au bit de rang i du plus petit des deux nombres binaires A, B, lesdits bits délivrés par ledit opérateur de comparaison $OC_i$ étant calculés selon les équations logiques suivantes :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

où "+", "$\oplus$" et "." représentent respectivement les opérations logiques OU, OU-EXCLUSIF et ET.

7. Opérateur de tri sélectif selon la revendication 6, caractérisé en ce qu'il comprend $int(Log_2(n-1)) + 1$ rangées, la jème rangée, où $1 \leq j \leq int(Log_2(n-1)) + 1$ comportant $int(n/2^j)$ comparateurs binaires, où "int" représente la fonction "partie entière".

8. Opérateur de tri sélectif selon l'une quelconque des revendications 6 et 7, pour choisir le plus grand ou le plus petit parmi les n nombres binaires reçus, caractérisé en ce qu'il comprend en outre une première rangée de n inverseurs commandables (62) disposée en amont de la première rangée de comparateurs et un inverseur commandable (62) disposé en aval du comparateur de la dernière rangée, chaque inverseur commandable recevant un nombre binaire et délivrant ledit nombre binaire ou le complémentaire dudit nombre binaire, selon l'état d'un bit de commande reçu sur une entrée de commande M/m, tous les inverseurs commandables recevant le même bit de commande, l'état dudit bit déterminant si le résultat sera le maxi ou le mini.

9. Opérateur de tri sélectif selon l'une quelconque des revendications 6 à 9, à structure pipe-line verticale, caractérisé en ce que les rangées de comparateurs sont regroupées en blocs de p rangées consécutives, chaque bloc étant séparé du bloc suivant par une rangée de n registres.

10. Opérateur de tri sélectif selon l'une quelconque des revendications 6 à 9, à structure pipe-line horizontal pour ordonner n nombres binaires de c bits avec des comparateurs binaires à b bits, où c>b, caractérisé en ce qu'il comprend sur chaque entrée de chaque comparateur un registre pour recevoir un nombre binaire par paquets de b bits et pour délivrer ledit nombre binaire par paquets de b bits audit comparateur.

## Claims

1. Binary comparator for comparing two binary numbers $A = A_{b-1}, A_{b-2}, ..., A_0$ and $B = B_{b-1}, B_{b-2}, ..., B_0$, where b is an integer and b-1 designates the most significant bit, comprising b identical comparison operators $OC_{b-1}, OC_{b-2}, ..., OC_0$, the comparison operator $OC_i$, $0 \leq i \leq b-1$, receiving the bits $A_i$, $B_i$ of the binary numbers A, B, characterised in that it receives bits $T_{i+1}$, $V_{i+1}$ from the comparison operator $OC_{i+1}$, the comparison operator $OC_{b-1}$ receiving bits $T_b$, $V_b$, $T_b = 0$, $V_b = X$ (indeterminate value), the said comparison operator $OC_i$ delivering :
   - a bit $T_i$ indicating whether the comparison of the bits of order larger than i of the binary numbers A, B makes it possible to determine the smaller and the larger of these binary numbers,
   - a bit $V_i$ indicating, when the bit $T_i$ is affirmative, which of the two numbers A, B is the larger,
   - and at least one bit from among a bit $M_i$ equal to the bit of rank i of the larger of the two binary numbers A, B, and a bit $m_i$ equal to the bit of rank i of the smaller of the two binary numbers A, B,

   the said bits delivered by the said comparison operator $OC_i$ being calculated according to the following logic equations :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

   where "+", "⊕" and "." respectively represent the logic operations OR, EXCLUSIVE-OR and AND.

2. Complete sort operator for ordering a set of n binary numbers, where n is an integer comprising a set of identical binary comparators arranged in several rows, the comparators of two consecutive rows being connected in order to form a complete sort matrix, the comparators of the first row receiving the binary numbers to be ordered and the comparators of the last row delivering the ordered binary numbers, each comparator receiving a first binary number $A = A_{b-1}, A_{b-2}, ..., A_0$ and a second binary number $B = B_{b-1}, B_{b-2}, ..., B_0$, where B is an integer and b-1 designates the most significant bit and comprising b identical comparison operators $OC_{b-1}, OC_{b-2}, ..., OC_0$, the comparison operator $OC_i$, $0 \leq i \leq b-1$, receiving the bits At, $B_i$ of the binary numbers A, B, characterised in that it receives bits $T_{i-1}$, $V_{i+1}$, from the comparison operator $OC_{i+1}$, the comparison operator $OC_{b-1}$ receiving bits $T_b$, $V_b$ having a value of $T_b = 0$, $V_b = X$ (indeterminate value), the said comparison operator $OC_i$ delivering :
   - a bit $T_i$ indicating whether the comparison of the bits of order larger than i of the binary numbers A, B makes it possible to determine the smaller and the larger of these binary numbers,
   - a bit $V_i$ indicating, when the bit $T_i$ is affirmative, which of the two numbers A, B is the larger,
   - a bit $M_i$ equal to the bit of rank i of the larger of the two binary numbers A, B and a bit m, equal to the bit of rank i of the smaller of the two binary numbers A, B,

   the said bits delivered by the said comparison operator $OC_i$ being calculated according to the following logic equations :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

   where "+", "⊕" and "." respectively represent the logic operations OR, EXCLUSIVE-OR and AND.

3. Complete sort operator according to Claim 2, characterised in that it comprises n rows each comprising int(n/2) or int(n/2)-1 binary comparators where "int" represents the "integer part" function.

4. Complete sort operator according to either of Claims 2 and 3, with a vertical pipe-line structure, characterised in that the rows of comparators are regrouped into blocks of p consecutive rows, each block being separated from the following block by a row of n registers.

5. Complete sort operator according to any one of Claims 2 to 4, with a horizontal pipe-line structure for ordering n binary numbers of c bits with binary comparators with b bits, where c>b, characterised in that it comprises on each input of each comparator a register for receiving a binary number by packets of b bits and for delivering the said binary number by packets of b bits to the said comparator.

6. Selective sort operator for ordering a set of binary numbers, where n is an integer, comprising a set of identical binary comparators arranged in several rows, the comparators of two consecutive rows being connected in order to form a complete sort matrix, the comparators of the first row receiving the binary numbers to be ordered and the comparators of the last row delivering the ordered binary numbers, each comparator receiving a first binary number $A = A_{b-1}, A_{b-2}, ..., A_0$ and a second binary number $B = B_{b-1}, B_{b-2}, ..., B_0$, where B is an integer and b-1 designates the most significant bit and comprising b identical comparison operators $OC_{b-1}, OC_{b-2}, ..., OC_0$, the comparison operator $OC_i$, $0 \leq i \leq b-1$, receiving the bits $A_i, B_i$ of the binary numbers A, B, characterised in that it receives bits $T_{i+1}, V_{i+1}$ from the comparison operator $OC_{i+1}$, the comparison operator $OC_{b-1}$ receiving bits $T_b, V_b$ having a value equal to "0", the said comparison operator $OC_i$ delivering :

- a bit $T_i$ indicating whether the comparison of the bits of order larger than i of the binary numbers A, B makes it possible to determine the smaller and the larger of these binary numbers,
- a bit $V_i$ indicating, when the bit $T_i$ is affirmative, which of the two numbers A, B is the larger,
- and one of the bits from among a bit $M_i$ equal to the bit of rank i of the larger of the two binary numbers A, B and a bit $m_i$ equal to the bit of rank i of the smaller of the two binary numbers A, B,

the said bits delivered by the said comparison operator $OC_i$ being calculated according to the following logic equations :

$$T_i = T_{i+1} + A_i \oplus B_i$$
$$V_i = T_{i+1}.V_{i+1} + \overline{T}_{i+1}.\overline{A}_i.B_i$$
$$M_i = V_i.B_i + \overline{V}_i.A_i$$
$$m_i = V_i.A_i + \overline{V}_i.B_i$$

where "+", "⊕" and "." respectively represent the logic operations OR, EXCLUSIVE-OR and AND.

7. Selective sort operator according to Claim 6, characterised in that it comprises int(Log₂ (n-1))+1 rows, the $j^{th}$ row, where $1 \leq j \leq$ int(Log₂(n-1))+1 comprising int(n/2) binary comparators, where "int" represents the "integer part" function.

8. Selective sort operator according to either of Claims 6 and 7, for choosing the larger or the smaller among the n binary numbers received, characterised in that it comprises moreover a first row of n controllable inverters (62) arranged upstream from the first row of comparators and a controllable inverter (62) arranged downstream from the comparator of the last row, each controllable inverter receiving a binary number and delivering the said binary number or the complement of the said binary number, according to the state of a control bit received on one control input M/m, all the controllable inverters receiving the same control bit, the state of the said bit determining whether the result shall be the maximum or the minimum.

9. Selective sort operator according to any one of Claims 6 to 9, with a vertical pipe-line structure, characterised in that the rows of comparators are regrouped into blocks of p consecutive rows, each block being separated from the following block by a row of n registers.

10. Selective sort operator according to any one of Claims 6 to 9, with a horizontal pipe-line structure for ordering n binary numbers of c bits with binary comparators with b bits, where c>b, characterised in that it comprises on each input of each comparator a register for receiving a binary number by packets of b bits and for delivering the said binary number by packets of b bits to the said comparator.

**Patentansprüche**

1. Binärer Komparator zum Vergleichen zweier binärer Zahlen $A = A_{b-1}, A_{b-2}, ..., A_0$ und $B = B_{b-1}, B_{b-2}, ..., B_0$, wo b eine ganze Zahl ist und b-1 das höchstwertigste Bit kennzeichnet, der b identische Vergleichsoperatoren $OC_{b-1}, OC_{b-2}, ..., OC_0$ aufweist, wobei der Vergleichsoperator $OC_i$ mit $0 \leq i \leq b-1$ die Bits $A_i, B_i$ der binären Zahlen A und B erhält, dadurch gekennzeichnet, daß er Bits $T_{i+1}, V_{i+1}$ des Vergleichsoperators $OC_{i+1}$ erhält, wobei der Vergleichsoperator $OC_{b-1}$ Bits $T_b, V_b, T_b = 0, V_b = X$ (unbestimmter Operator) erhält, wobei der Vergleichsoperator $OC_i$ erzeugt:

- ein Bit $T_i$, das anzeigt, ob der Vergleich von Bits mit höherer Wertigkeit als i der binären Zahlen A, B erlaubt, die kleinere und die größere dieser beiden Zahlen zu bestimmen,
- ein Bit $V_i$, das angibt, sobald das Bit $T_i$ bestätigt ist, welche der beiden Zahlen A, B die größere ist,
- und wenigstens ein Bit aus einem Bit $M_i$ gleich dem Bit des Ranges i der größten der beiden binären Zahlen A, B und einem Bit m gleich dem Bit des Ranges i der kleinsten der beiden binären Zahlen A, B,

wobei die durch den Vergleichsoperator $OC_i$ erzeugten Bits entsprechend den folgenden logischen Gleichungen berechnet werden:

$$T_i = T_{i+1} + A_i \oplus B_i$$
$$V_i = T_{i+1} \cdot V_{i+1} + \overline{T}_{i+1} \cdot \overline{A}_i \cdot B_i$$
$$M_i = V_i \cdot B_i + \overline{V}_i \cdot A_i$$
$$m_i = V_i \cdot A_i + \overline{V}_i \cdot B_i$$

wobei "+", "⊕" und "." jeweils die logischen Operationen ODER, EXKLUSIVES ODER und UND bezeichnen.

2. Vollständiger Sortieroperator zum Ordnen einer Anordnung von n binären Zahlen, wobei n eine ganze Zahl ist, mit einer Anordnung von identischen, binären Komparatoren, die in mehreren Zeilen angeordnet sind, wobei die Komparatoren zweier aufeinander folgender Zeilen verbunden sind, um eine vollständige Sortiermatrix zu bilden, wobei die Komparatoren der ersten Zeile die zu ordnenden, binären Zahl erhalten und die Komparatoren der letzten Zeile die geordneten, binären Zahlen abgeben, wobei jeder Komparator eine erste binäre Zahl $A = A_{b-1}, A_{b-2}, ..., A_0$ und eine zweite binäre Zahl $B = B_{b-1}, B_{b-2}, ..., B_0$, wo b eine ganze Zahl ist und b-1 das höchstwertigste Bit kennzeichnet, und b identische Vergleichsoperatoren $OC_{b-1}, OC_{b-2}, ..., OC_0$ aufweist, wobei der Vergleichsoperator $OC_i$ mit $0 \leq i \leq b-1$ die Bits $A_i$, $B_i$ der binären Zahlen A und B erhält, dadurch gekennzeichnet, daß er Bits $T_{i+1}$, $V_{i+1}$ des Vergleichsoperators $OC_{i+1}$ erhält, wobei der Vergleichsoperator $OC_{b-1}$ Bits $T_b$, $V_b$, die als Wert $T_b = 0$, $V_b = X$ (unbestimmter Operator) besitzen, erhält, wobei der Vergleichsoperator $OC_i$ erzeugt:
- ein Bit $T_i$, das anzeigt, ob der Vergleich von Bits mit höherer Wertigkeit als i der binären Zahlen A, B erlaubt, die kleinere und die größere dieser beiden Zahlen zu bestimmen,
- ein Bit $V_i$, das angibt, sobald das Bit $T_i$ bestätigt ist, welche der beiden Zahlen A, B die größere ist,
- und wenigstens ein Bit aus einem Bit $M_i$ gleich dem Bit des Ranges i der größten der beiden binären Zahlen A, B und einem Bit $m_i$ gleich dem Bit des Ranges i der kleinsten der beiden binären Zahlen A, B,

wobei die durch den Vergleichsoperator $OC_i$ erzeugten Bits entsprechend den folgenden logischen Gleichungen berechnet werden:

$$T_i = T_{i+1} + A_i \oplus B_i$$
$$V_i = T_{i+1} \cdot V_{i+1} + \overline{T}_{i+1} \cdot \overline{A}_i \cdot B_i$$
$$M_i = V_i \cdot B_i + \overline{V}_i \cdot A_i$$
$$m_i = V_i \cdot A_i + \overline{V}_i \cdot B_i$$

wobei "+", "⊕" und "." jeweils die logischen Operationen ODER, EXKLUSIVES ODER und UND bezeichnen.

3. Vollständiger Vergleichsoperator nach Anspruch 2, dadurch gekennzeichnet, daß er n Zeilen ausweist, die jeweils int(n/2) oder int-(n/2)-1 binäre Komparatoren aufweisen, wobei "int" die Funktion "ganzer Teil" darstellt.

4. Vollständiger Vergleichsoperator nach einem der Ansprüche 2 und 3 mit vertikaler Pipelinestruktur, dadurch gekennzeichnet, daß die Komparatorzeilen in Blöcken aus p aufeinander folgenden Zeilen umgeordnet sind, wobei jeder Block vom folgenden Block durch eine Zeile von n Registern getrennt ist.

5. Vollständiger Vergleichsoperator nach einem der Ansprüche 2 bis 4 mit horizontaler Pipelinestruktur zum Ordnen von n binären Zahlen mit c Bits mit binären Komparatoren mit b Bits, wobei c>b, dadurch gekennzeichnet, daS er an jedem Eingang jedes Komparators ein Register zum Erhalten einer binären Zahl in Paketen zu b Bits und zum Weitergeben der binären Zahl in Paketen zu b Bits an den Komparator umfaßt.

6. Selektiver Sortieroperator zum Ordnen einer Anordnung von n binären Zahlen, wobei n eine ganze Zahl ist, mit einer Anordnung von identischen, binären Komparatoren, die in mehreren Zeilen angeordnet sind, wobei die Komparatoren zweier aufeinander folgender Zeilen verbunden sind, um eine vollständige Sortiermatrix zu bilden, wobei die Komparatoren der ersten Zeile die zu ordnenden, binären Zahl erhalten und die Komparatoren der letzten Zeile die geordneten, binären Zahlen abgeben, wobei jeder Komparator eine erste binäre Zahl $A = A_{b-1}, A_{b-2}, ..., A_0$ und eine zweite binäre Zahl $B = B_{b-1}, B_{b-2}, ..., B_0$, wo b eine ganze Zahl ist und b-1 das höchstwertigste Bit kennzeichnet, und b identische Vergleichsoperatoren $OC_{b-1}, OC_{b-2}, ..., OC_0$ aufweist, wobei der Vergleichsoperator $OC_i$ mit $0 \leq i \leq b-1$ die Bits $A_i$, $B_i$ der binären Zahlen A und B erhält, dadurch gekennzeichnet, daß er Bits $T_{i+1}$, $V_{i+1}$ des Vergleichsoperators $OC_{i+1}$ erhält, wobei der Vergleichsoperator $OC_{b-1}$ Bits $T_b$, $V_b$, die einen Wert gleich "0" besitzen, erhält, wobei der Vergleichsoperator $OC_i$ erzeugt:
- ein Bit $T_i$, das anzeigt, ob der Vergleich von Bits mit höherer Wertigkeit als i der binären Zahlen A, B erlaubt, die kleinere und die größere dieser beiden Zahlen zu bestimmen,
- ein Bit $V_i$, das angibt, sobald das Bit $T_i$ bestätigt ist, welche der beiden Zahlen A, B die größere ist,
- und wenigstens ein Bit aus einem Bit $M_i$ gleich dem Bit des Ranges i der größten der beiden binären Zahlen A, B und einem Bit $m_i$ gleich dem Bit des Ranges i der kleinsten der beiden binären Zahlen A, B,

wobei die durch den Vergleichsoperator $OC_i$ erzeugten Bits entsprechend den folgenden logischen Gleichungen berechnet werden:

$$T_i = T_{i+1} + A_i \oplus B_i$$
$$V_i = T_{i+1} \cdot V_{i+1} + \overline{T}_{i+1} \cdot \overline{A}_i \cdot B_i$$
$$M_i = V_i \cdot B_i + \overline{V}_i \cdot A_i$$
$$m_i = V_i \cdot A_i + \overline{V}_i \cdot B_i$$

wobei "+", "⊕" und "." jeweils die logischen Operationen ODER, EXKLUSIVES ODER und UND bezeichnen.

7. Selektiver Sortieroperator nach Anspruch 6, dadurch gekennzeichnet, daß er $\text{int}(\text{Log}_2(n-1))+1$ Zeilen umfaßt, wobei die j-te Zeile mit $1 \leq j \leq \text{int}(\text{Log}_2(n-1))+1$ $\text{int}(n/2)$ binäre Komparatoren umfaßt, wobei "int" die Funktion "ganzer Teil" bezeichnet.

8. Selektiver Sortieroperator nach einem der Ansprüche 6 und 7 zum Auswählen der größten oder kleinsten unter n erhaltenen, binären Zahlen, dadurch gekennzeichnet, daß er außerdem eine erste Zeile mit n steuerbaren Invertern (62), die oberhalb der ersten Komparatorzeile angeordnet ist, und einen steuerbaren Inverter (62) aufweist, der unterhalb des Komparators der letzten Zeile angeordnet ist, wobei jeder steuerbare Inverter eine binäre Zahl erhält und die binäre Zahl oder das Komplement der binären Zahl entsprechend dem Zustand eines Steuerbits erzeugt, das auf einem Steuereingang M/m erhalten wird, wobei alle steuerbaren Inverter dasselbe Steuerbit erhalten, wobei der Zustand dieses Bits festlegt, ob das Resultat das Maximum oder das Minimum ist.

9. Vollständiger Vergleichsoperator nach einem der Ansprüche 6 bis 8 mit vertikaler Pipelinestruktur, dadurch gekennzeichnet, daß die Komparatorzeilen in Blöcken aus p aufeinander folgenden Zeilen umgeordnet sind, wobei jeder Block vom folgenden Block durch eine Zeile von n Registern getrennt ist.

10. Vollständiger Vergleichsoperator nach einem der Ansprüche 6 bis 9 mit horizontaler Pipelinestruktur zum Ordnen von n binären Zahlen mit c Bits mit binären Komparatoren mit b Bits, wobei c>b, dadurch gekennzeichnet, daß er an jedem Eingang jedes Komparators ein Register zum Erhalten einer binären Zahl in Paketen zu b Bits und zum Weitergeben der binären Zahl in Paketen zu b Bits an den Komparator umfaßt.

FIG. 1

FIG. 2

FIG. 3

FIG. 4

FIG. 5

FIG. 6

# FIG. 7

FIG. 8

FIG. 11

FIG 9

FIG. 10

EP 0 319 421 B1

# FIG. 12

# FIG. 13a

# FIG. 13b